# EUROPÄISCHE PATENTSCHRIFT

(11) **EP 3 247 900 B1**
(45) Veröffentlichungstag und Bekanntmachung des Hinweises auf die Patenterteilung: **06.05.2020**
(21) Anmeldenummer: 16704134.2
(22) Anmeldetag: 22.01.2016
(51) Int. Cl.: F03D 1/00

(54) **WINDENERGIEANLAGE**
WIND TURBINE
ÉOLIENNE

(30) Priorität: 22.01.2015 CH 782015
(43) Veröffentlichungstag der Anmeldung: 29.11.2017
(73) Patentinhaber: Mega Windforce IP BV, 1544 Zaandijk (NL)
(72) Erfinder: KLANT, Keesjan, 2136 BC Zwaanshoek (NL); VLEUGEL, Woud, 2151 NB Nieuw Vennep (NL)
(74) Vertreter: EP&C
(86) Internationale Anmeldenummer: PCT/EP2016/051338
(87) Internationale Veröffentlichungsnummer: WO 2016/116598

(56) Entgegenhaltungen:
- EP-A1- 1 783 363
- EP-A1- 2 594 787
- WO-A2-2011/116845
- US-A1- 2003 137 149
- US-A1- 2007 278 796

## Beschreibung

### Gebiet der Erfindung

Die Erfindung betrifft eine Windenergieanlage gemäss Oberbegriff des Anspruchs 1.

### Stand der Technik

Windenergieanlagen gemäss dem Stand der Technik, siehe z.B. WO2011/116845, besitzen einen Mast, an dessen freien Ende eine Maschinengondel angeordnet ist, welche einen Generator beherbergt.

An der Maschinengondel ist ein sternförmiger Rotor mit zumeist drei Rotorblättern um eine zentrale horizontale Achse drehbar angeordnet. Das Drehmoment des Rotors wird direkt oder indirekt durch ein Getriebe mittels einer Rotorwelle auf den Generator übertragen. Da die Rotorblätter Längen von bis zu 85 Metern aufweisen, wirken enorme mechanische Kräfte, welche die Lagerungen und die Rotorwelle an ihre mechanischen Grenzen bringen. Direkt angetriebene Generatoren müssen für einen guten Wirkungsgrad in ihrem Durchmesser an den Rotordurchmesser angepasst sein. Windenergieanlagen mit diesem zentralen Lagerkonzept sind an ihren physischen Grenzen angelangt.

### Aufgabe der Erfindung

Aus den Nachteilen des beschriebenen Stands der Technik resultiert die die vorliegende Erfindung initiierende Aufgabe eine gattungsgemässe Windenergieanlage weiterzuentwickeln, welche einen verbesserten Ertrag besitzt. Insbesondere soll bei den heute üblichen Dimensionen von Windenergieanlagen deren mechanische Belastung reduziert werden, was zu einem reduzierten Aufwand für die Instandhaltung und Wartung führt.

### Beschreibung

Die Lösung der gestellten Aufgabe gelingt bei einer Windenergieanlage (WEA) dadurch, dass die Tragstruktur einen stationären Ring aufweist, an dem der Rotor drehend geführt ist und an dem der Stator des Generators angeordnet ist. Die mechanische Last des Rotors konzentriert sich durch das Vorsehen des stationären Rings nicht auf eine zentrale Drehachse sondern kann auf den Umfang des stationären Rings verteilt werden. Dadurch lässt sich die mechanische Belastung der erfindungsgemässen Windenergieanlage reduzieren, was zu Einsparungen bei der Instandhaltung und Wartung führt. Auch lassen sich mit der vorgeschlagenen Bauweise Windanlagen mit verlängerten Rotorblättern realisieren. Dies ist mit dem Bautyp des Stands der Technik nicht mehr möglich, da dieser Bautyp an die Grenzen der mechanischen Belastbarkeit stösst. Den stationären Ring als Stator des Generators zu nutzen ermöglicht es, den Generator direkt in die bestehende Rotor - stationärer Ring - Anordnung zu integrieren. Eine weitere komplizierte mechanische Übertagung der Rotorbewegung auf den Generator ist demnach nicht erforderlich. Bevorzugt ist es daher, wenn der Generator zwischen dem stationären Ring und dem Rotor ausgebildet ist.

Als vorteilhaft erweist es sich, wenn der Rotor frei ist von einer Verbindung mit einem Maschinenelement, welches eine Welle oder eine Achse ist. Der Rotor ist also auch frei von diesen Maschinenelementen. Unter dem Begriff einer Welle ist im Rahmen dieser Anmeldung ein stabförmiges Maschinenelement zu verstehen, das zum Weiterleiten von Drehbewegungen und Drehmomenten des Rotors sowie zur Lagerung des Rotors Verwendung findet. Unter einer Achse soll ein stabförmiges Maschinenelement verstanden sein, welches kein Drehmoment überträgt. Da der Rotor an dem stationären Ring geführt ist, kann auf eine Rotorwelle oder eine Rotorachse in Gestalt eines Stabes verzichtet werden. Die mechanische Belastung des Rotors ist dadurch nicht zentral auf eine Welle oder Achse übertragen, sondern kann sich auf den durchmessergrösseren stationären Ring verteilen.

In einer besonders bevorzugten Ausgestaltungsform der Erfindung umfasst der Rotor einen Rotorring, welcher an dem stationären Ring mit einer Vielzahl von Wälzlagern oder Wälzkörpern gelagert ist. Die Wälzkörper können als Räder oder Rollen ausgestaltet sein. Die hohe mechanische Belastung, welche zwangsläufig bei WEA auftritt, kann bei der erfindungsgemässen WEA auf den Umfang des stationären Rings verteilt werden. Deshalb muss die Belastung nicht von einigen wenigen Wälzlagern aufgenommen werden, sondern kann auf viele kleinere Wälzlager verteilt werden. Die Wälzkörper der Wälzlager können Zylinder, Rollen, Tonnen, Kugeln, Kegel usw. sein.

In einer Ausgestaltungsform der Erfindung umfasst der Rotor einen Rotorring, welcher an dem stationären Ring durch magnetische Kräfte schwebend gelagert ist. Gerade bei hohen mechanischen Belastungen ist eine schwebende magnetische Lagerung von Vorteil, da dieses Lagerkonzept keinem mechanischen Verschleiss unterworfen ist. Dadurch können sich die erhöhten Investitionskosten rasch amortisieren.

Die Erfindung zeichnet sich bevorzugt dadurch aus, dass in die Wälzlager Generatoren integriert sind oder die Wälzlager mechanisch mit Generatoren in Verbindung stehen. Dadurch ist es möglich, nicht nur einen einzigen Generator zur Umwandlung in elektrische Energie zu verwenden, sondern es können viele kleinere Generatoren mit den Wälzlagern in Verbindung stehen. Dies hat den Vorteil, dass die Kopplung an den Rotorring sehr einfach erfolgen kann, da die Wälzlager ohnedies vorhanden sind. Ein weiterer Vorteil liegt darin, dass je nach Windverhältnissen Generatoren einfach zu- und weggeschaltet werden können.

Als zweckdienlich hat es sich erwiesen, wenn an dem Rotor in Umfangsrichtung wenigstens eine umlaufende Schiene festgelegt ist, welche die Drehbewegung des Rotors auf die Wälzlager überträgt. Der Rotorring benötigt daher keine präzise bearbeitete Lauffläche, an der die Wälzkörper abrollen können. Die Schienen, welche kreisförmig ausgeführt sind, sind einfach und kostengünstig herstellbar und rasch in den Rotorring zu integrieren.

Das Verhältnis von Rotor durchmesser zur Rotorblattlänge beträgt 1:2, bevorzugt 1:1,5 und besonders bevorzugt 1:1.
Trotz des sich durch diese Verhältnisse ergebenden relativ grossen Durchmessers des Rotorrings ist die Fläche zur Nutzung des Windes nur um 10 % geringer, als bei herkömmlichen WEA mit demselben Rotordurchmesser. Der grosse Rotorring kann die hohen mechanischen Belastungen besonders gut aufnehmen. Eine bevorzugte Dimensionierung des Rotorringes ist beispielsweise 50 m bei einer Rotorblattlänge von ebenfalls 50 m.

Da durch den grossen Rotorring die erfindungsgemässe WEA bei drei Rotorblättern nicht an ihre mechanischen Grenzen stösst, können auch mehr als drei Rotorblätter verwendet werden und/oder deren Rotorblattlänge verlängert werden, dadurch ist es Denkbar, dass die erfindungsgemässe WEA bis zu 20 Megawatt Leistung erbringen kann.

Zweckmässigerweise sind an dem stationären Ring wenigstens zwei Kreisbahnen von Wälzlagern angeordnet, um die mechanische Belastung, verursacht durch den grossen Rotor, noch besser verteilen zu können.

In einer weiteren bevorzugten Ausgestaltungsform der Erfindung sind die Generator-Spulen in dem stationären Ring angeordnet. Dadurch ist die Abnahme des erzeugten elektrischen Stroms besonders einfach und es kann auf Schleifabnehmer verzichtet werden.

Im Umkehrschluss ist es von Vorteil, wenn die Generator-Magneten in dem Rotor angeordnet sind. Insbesondere, wenn die Magneten Permanentmagneten sind, benötigt der Rotor keine Leitungsverbindung zum statischen Teil der WEA, wodurch der Aufbau vereinfacht wird.

Von Vorteil ist es, wenn die von dem Generator erzeugte elektrische Energie an dem stationären Ring abnehmbar ist. An unbewegten Teilen gestaltet sich die Stromabnahme als einfacher als an bewegten Teilen, insbesondere wenn die bewegten Teile, wie der Rotorring sehr gross sind.

Dadurch, dass die Tragstruktur vorteilhaft einen T-förmigen Steher mit einem Mast und einem Querträger umfasst, wobei der stationäre Ring an den Enden des Querträgers befestigt ist, lässt sich der stationäre Ring zuverlässig an der Tragstruktur halten und der Windwiderstand der Tragstruktur ist trotzdem gering.

Zweckmässigerweise ist der Querträger um die Längsachse des Mastes rotierbar, damit die WEA nach dem Wind verdrehbar ist.

Als vorteilhaft hat es sich erwiesen, wenn der Rotorring ausserhalb des stationären Rings an diesem angeordnet ist. Der Rotorring lässt sich auf den stationären Ring aufstecken und lässt sich, beispielsweise bei Wartungsarbeiten an der Lagerung, von diesem abziehen.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine axonometrische Gesamtansicht einer Windenergieanlage;

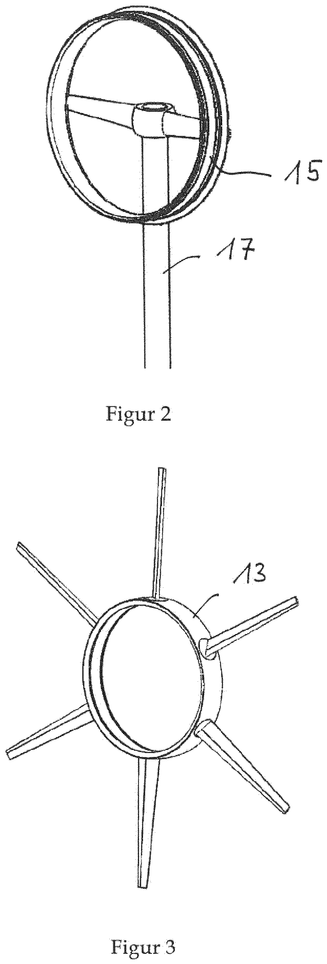

- Figur 2:: eine axonometrische Ansicht einer Tragestruktur samt stationärem Ring;
- Figur 3:: eine axonometrische Ansicht eines sich an dem stationären Ring drehenden Rotors mitsamt einer Vielzahl von Rotorblättern und
- Figur 4:: die Windenergieanlage teilweise freigeschnitten zur Veranschaulichung der Rotorlagerung.

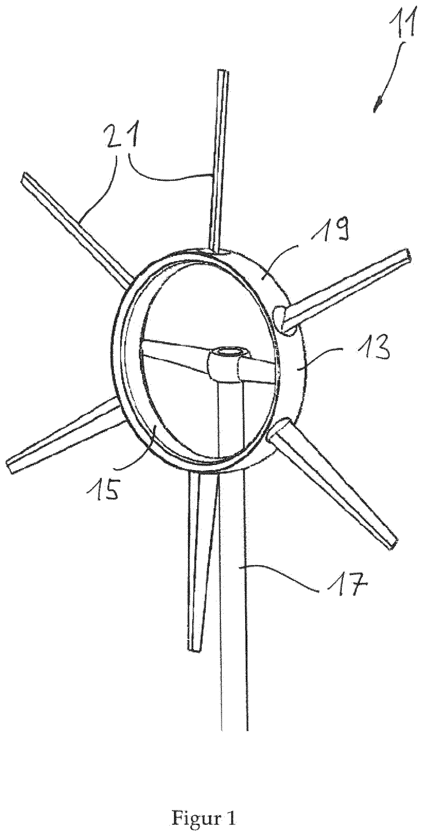

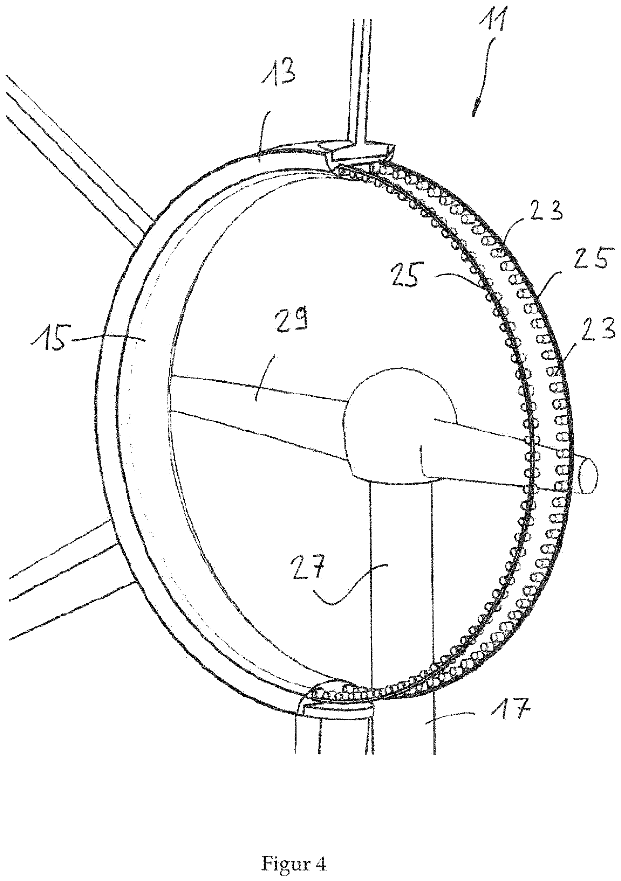

In den Figuren 1 und 4 ist eine Ausgestaltungsform der erfindungsgemässen Windenergieanlage gezeigt, welche gesamthaft mit dem Bezugszeichen 11 bezeichnet ist. Die Windenergieanlage (WEA) 11 umfasst einen Rotor 13, welcher um einen stationären Ring 15 drehbar gelagert ist. Der stationäre Ring 15 ist von einem T-förmigen Steher 17 getragen bzw. gehalten.

Der Rotor 13 umfasst einen Rotorring 19 und eine Vielzahl von Rotorblättern 21. Der Rotorring 19 besitzt bevorzugt einen Durchmesser, welcher im Wesentlichen der Länge der Rotorblätter entspricht. Beispielseise betragen der Durchmesser des Rotorrings 19 und die Länge der Rotorblätter 50 Meter. Trotz des beachtlichen Durchmessers des Rotorrings relativ zur Länge der Rotorblätter 21 beträgt der Flächeninhalt des Rotorrings 19 lediglich 10% der Kreisfläche, welche von den freien Enden der Rotorblätter 21 bestimmt wird. Die nutzbare Windfläche ist durch den Rotorring 19 also nur geringfügig reduziert. Die Länge der Rotorblätter 21 kann daher im Vergleich zur Rotorblätterlänge bei WEA des Stands der Technik um ca. 1/3 reduziert werden, ohne dass die nutzbare Windfläche signifikant reduziert werden würde. Dadurch können die Materialkosten der erfindungsgemässen WEA 11 signifikant reduziert werden, da die Materialkosten der Rotorblätter geringer sind.

Der Rotorring 19 ist an der Aussenseite des stationären Rings 15 drehbar geführt. Die Lagerung kann durch eine Vielzahl von Wälzkörpern 23 übernommen sein, wie dies in der Figur 4 gezeigt ist. Die Wälzkörper 23 können in Vertiefungen an der Aussenseite des stationären Rings 15 drehbar aufgenommen sein und in zwei oder mehr konzentrischen Bahnen an dem stationären Ring 15 angeordnet sein. Die Wälzkörper 23 können direkt an einer Lauffläche an der Innenseite des Rotorrings 19 gleiten oder indirekt an Führungsschienen 25. Die Wälzkörper 23 können Räder, Rollen, Tonnen, Kugeln, Nadeln und andere rotationssymmetrische Körper sein. Die Führungsschienen 25 sind fest mit dem Rotorring 19 verbunden und wälzen die Drehbewegung des Rotorrings 19 auf die Wälzkörper 23 ab. Die hohe mechanische Belastung, welche durch das Gewicht der Rotorblätter entsteht, muss nicht, wie bei herkömmlichen WEA durch eine zentrale Lagerung aufgenommen werden, sondern lässt sich auf die Vielzahl von Wälzkörpern 23 verteilen. Dadurch können die Instandhaltungskosten der WEA 11 reduziert werden. Denkbar ist es auch, die Rotorblattlänge der WEA 11 zu verlängern, da die Belastbarkeit der Wälzkörper 23 bei den angeführten Dimensionen nicht ausgereizt ist.

Denkbar ist es auch, dass die Lagerung des Rotorrings 19 an dem stationären Ring 15 durch magnetische Kräfte erfolgt, welche den Rotorring 19 an dem stationären Ring 15 in Schwebe hält.

Der Generator der WEA 11, welcher die Windenergie in elektrische Energie umwandelt, ist bevorzugt zwischen dem Rotorring 19 und dem stationären Ring 15 angeordnet. Da es bei einem Generator nur auf eine relative Bewegung von einem Magnetfeld zu einer Induktionsspule ankommt, ist es bevorzugt, wenn der Stator des Generators in dem ohnedies feststehenden stationären Ring 15 angeordnet ist. Zweckmässigerweise ist der Rotor bzw. Läufer des Generators in dem Rotorring 19 angeordnet. Um die Abnahme des erzeugten elektrischen Stroms zu vereinfachen, ist es bevorzugt, wenn die Stromabnahme an dem stationären Ring 15 erfolgt, wenngleich die Abnahme mit Schleifelementen auch am Rotorring 19 erfolgen kann. Daraus ergibt sich für eine vereinfachte Stromabnahme, dass die Generatormagneten in dem Rotorring 19 und die Induktionsspulen in, dem stationären Ring 15 angeordnet sind.

Denkbar ist es auch, dass in die Wälzkörper 23 einzelne Generatoren integriert sind oder einzelne Generatoren mit den Wälzkörpern 23 in mechanischer Verbindung stehen. Je nach Windleistung können einzelne Generatoren zugeschaltet werden oder werden von der Rotationsübertragung der Wälzkörper 23 gelöst.

WEA des Stands der Technik besitzen üblicherweise drei Rotorblätter. Diese Anzahl kann bei der erfindungsgemässen WEA erhöht werden, da diese durch ihre Ringstruktur höheren mechanischen Belastungen standhalten kann.

Der T-förmige Steher umfasst einen Mast 27 und einen Querträger 29. Der stationäre Ring 15 ist an den Enden des Querträgers 29 angeordnet. Dadurch kann eine ausreichend stabile Halterung bei gleichzeitig möglichst geringem Windwiderstand erreicht werden.

Durch das Vorsehen eines stationären Ringes 15 und eines Rotorrings 19 können die mechanischen Kräfte dezentralisiert werden und wirken nicht, wie bei WEA des Stands der Technik, in einem zentralen Punkt der Drehachse. Die mechanischen Kräfte können auf eine Vielzahl von Wälzkörpern verteilt werden.

### Legende:

- 11: Windenergieanlage
- 13: Rotor
- 15: Stationärer Ring
- 17: Steher, Tragstruktur
- 19: Rotorring
- 21: Rotorblätter
- 23: Wälzkörper, Wälzlager
- 25: Führungsschienen
- 27: Mast
- 29: Querträger

## Patentansprüche

1. Windenergieanlage (11) mit
- einer Tragstruktur (17),
- einem Rotor (13) mit einem oder mehreren Rotorblättern (21), der an der Tragstruktur (17) frei um eine Rotationsachse rotierend angeordnet ist, und
- einem Generator, der mit dem Rotor (13) in Verbindung steht und bei drehendem Rotor (13) die Windenergie in elektrische Energie umwandelt,
**dadurch gekennzeichnet,**
**dass** die Tragstruktur (17) einen stationären Ring (15) aufweist, an dem der Rotor (13) drehend geführt ist und an dem der Stator des Generators angeordnet ist und
**dass** der Rotor (13) einen Rotorring (19) umfasst, dessen Durchmesser ein Verhältnis zur Rotorblattlänge von 1:2, bevorzugt von 1:1,5 und besonders bevorzugt von 1:1 aufweist.

2. Windenergieanlage nach Anspruch 1, **dadurch gekennzeichnet, dass** der Durchmesser des Rotorrings (19) 25 m, bevorzugt 33 m und besonders bevorzugt 50 m beträgt.

3. Windenergieanlage nach Anspruch 1 oder 2, **dadurch gekennzeichnet, dass** der Rotor (13) frei ist von einer Verbindung mit einem Maschinenelement, welches eine Welle oder eine Achse ist.

4. Windenergieanlage nach einem der vorangehenden Ansprüche, **dadurch gekennzeichnet, dass** der Generator zwischen dem stationären Ring (15) und dem Rotor (13) ausgebildet ist.

5. Windenergieanlage nach einem der Ansprüche 1 bis 4, **dadurch gekennzeichnet, dass** der Rotorring (19) an dem stationären Ring (15) mit einer Vielzahl von Wälzlagern oder Wälzkörpern (23) gelagert ist.

6. Windenergieanlage nach einem der Ansprüche 1 bis 4, **dadurch gekennzeichnet, dass** der Rotorring (19) an dem stationären Ring (15) durch magnetische Kräfte schwebend gelagert ist.

7. Windenergieanlage nach Anspruch 5, **dadurch gekennzeichnet, dass** in die Wälzlager (23) Generatoren integriert sind oder die Wälzlager (23) mechanisch mit Generatoren in Verbindung stehen.

8. Windenergieanlage nach Anspruch 5 oder 7, **dadurch gekennzeichnet, dass** an dem Rotor (13) in Umfangsrichtung wenigstens eine umlaufende Schiene (25) festgelegt ist, welche die Drehbewegung des Rotors (13) auf die Wälzlager (23) überträgt.

9. Windenergieanlage nach einem der vorangehenden Ansprüche, **dadurch gekennzeichnet, dass** die Anzahl der Rotorblätter (21) wenigstens 3 ist.

10. Windenergieanlage nach Anspruch 5 oder 7 bis 9, **dadurch gekennzeichnet, dass** an dem stationären Ring (15) wenigstens zwei Kreisbahnen von Walzlagern (23) angeordnet sind.

11. Windenergieanlage nach einem der vorangehenden Ansprüche, **dadurch gekennzeichnet, dass** die Generator-Spulen in dem stationären Ring (15) angeordnet sind.

12. Windenergieanlage nach einem der vorangehenden Ansprüche, **dadurch gekennzeichnet, dass** die Generator-Magneten in dem Rotor (13) angeordnet sind.

13. Windenergieanlage nach einem der vorangehenden Ansprüche, **dadurch gekennzeichnet, dass** die von dem Generator erzeugte elektrische Energie an dem stationären Ring (15) abnehmbar ist.

14. Windenergieanlage nach einem der vorangehenden Ansprüche, **dadurch gekennzeichnet, dass** die Tragstruktur einen T-förmigen Steher (17) mit einem Mast (27) und einem Querträger (29) umfasst, wobei der stationäre Ring (15) an den Enden des Querträgers (29) befestigt ist.

15. Windenergieanlage nach einem der Ansprüche 5 bis 14, **dadurch gekennzeichnet, dass** der Rotorring (19) ausserhalb des stationären Rings (15) an diesem angeordnet ist.

## Claims

1. Wind energy plant (11) which includes:
- a support structure (17),
- a rotor (13) which includes one or multiple rotor blades (21), which rotor is arranged on the support structure (17) to be freely rotatable about a rotation axis, and
- a generator which is connected to the rotor (13) and which converts the wind energy into electrical energy when the rotor (13) is rotating,
**characterized in that** the support structure (17) includes a stationary ring (15) on which the rotor (13) is rotatably guided and on which the stator of the generator is arranged,
and
that the rotor (13) comprises a rotor ring (19) of which the diameter has a ratio to the rotor blade length of 1:2, preferably 1:1.5, and particularly preferably 1:1.

2. Wind energy plant according to claim 1, **characterized in that** the diameter of the rotor ring (19) is 25m, preferably 33m, and particularly preferably 50m.

3. Wind energy plant according to claim 1 or 2, **characterized in that** the rotor (13) is free of a connection to a machine element, which is a shaft or an axle.

4. Wind energy plant according to any of the preceding claims, **characterized in that** the generator is provided between the stationary ring (15) and the rotor (13).

5. Wind energy plant according to any of the claims 1 - 4, **characterized in that** the rotor ring (19) is supported on the stationary ring (15) via a plurality of roller bearings or rolling elements (23).

6. Wind energy plant according to any of the claims 1 - 4, **characterized in that** the rotor ring (19) is supported in a floating manner on the stationary ring (15) by magnetic forces.

7. Wind energy plant according to claim 5, **characterized in that** generators are integrated into the roller bearings (23), or the roller bearings (23) are mechanically connected to generators.

8. Wind energy plant according to claim 5 or 7, **characterized in that** at least one circumferential rail (25) which transmits the rotary motion of the rotor (15) to the roller bearings (23) is fixed to the rotor (13) in the circumferential direction.

9. Wind energy plant according to any of the preceding claims, **characterized in that** the number of rotor blades (21) is at least three.

10. Wind energy plant according to claim 5 or 7 through 9, **characterized in that** at least two circular tracks of roller bearings (23) are situated on the stationary ring (15).

11. Wind energy plant according to any of the preceding claims, **characterized in that** the generator coils are situated in the stationary ring (15).

12. Wind energy plant according to any of the preceding claims, **characterized in that** the generator magnets are situated in the rotor (13).

13. Wind energy plant according to any of the preceding claims, **characterized in that** the electrical energy generated by the generator is withdrawable at the stationary ring (15).

14. Wind energy plant according to any of the preceding claims, **characterized in that** the support structure includes a T-shaped upright (17) with a tower (27) and a crossmember (29), the stationary ring (15) being fastened to the ends of the crossmember (29).

15. Wind energy plant according to any of the claims 5 through 14, **characterized in that** the rotor ring (19) is arranged outside of the stationary ring (15) thereon.

## Revendications

1. Éolienne (11) avec
- une structure porteuse (17),
- un rotor (13) avec une ou plusieurs pales de rotor (21), qui est disposé sur la structure porteuse (17) de manière librement rotative autour d'un axe de rotation, et
- un générateur, qui est relié avec le rotor (13) et qui convertit, lorsque le rotor (13) tourne, l'énergie éolienne en énergie électrique,
**caractérisé en ce que**
la structure porteuse (17) comprend un anneau stationnaire (15) au niveau duquel le rotor (13) est guidé de manière rotative et au niveau duquel le stator du générateur est disposé et
**en ce que** le rotor (13) comprend un anneau de rotor (19) dont le diamètre présente, avec la longueur des pales du rotor, un rapport de 1:2, de préférence de 1:1,5 et plus particulièrement de 1:1.

2. Éolienne selon la revendication 1, **caractérisée en ce que** le diamètre de l'anneau du rotor (19) est de 25 m, de préférence de 33 m et plus particulièrement de 50 m.

3. Éolienne selon la revendication 1 ou 2, **caractérisée en ce que** le rotor (13) est libre d'une liaison avec un élément de machine, qui est un arbre ou un axe.

4. Éolienne selon l'une des revendications précédentes, **caractérisée en ce que** le générateur est disposé entre l'anneau stationnaire (15) et le rotor (13).

5. Éolienne selon l'une des revendications 1 à 4, **caractérisée en ce que** l'anneau du rotor (19) est logé au niveau de l'anneau stationnaire (15) avec une pluralité de paliers à rouleaux ou de corps à rouleaux (23).

6. Éolienne selon l'une des revendications 1 à 4, **caractérisée en ce que** l'anneau du rotor (19) est logé de manière flottante au niveau de l'anneau stationnaire (15) par des forces magnétiques.

7. Éolienne selon la revendication 5, **caractérisée en ce que**, dans les paliers à rouleaux (23), sont intégrés des générateurs ou les paliers à rouleaux (23) sont reliés mécaniquement avec des générateurs.

8. Éolienne selon la revendication 5 ou 7, **caractérisée en ce que**, sur le rotor (13), dans la direction circonférentielle, est fixé au moins un rail périphérique (25) qui transmet le mouvement de rotation du rotor (13) aux paliers à rouleaux (23).

9. Éolienne selon l'une des revendications précédentes, **caractérisée en ce que** le nombre de pales de rotor (21) est d'au moins 3.

10. Éolienne selon la revendication 5 ou 7 à 9, **caractérisée en ce que**, sur l'anneau stationnaire (15), sont disposées au moins deux pistes circulaires de paliers à rouleaux (23).

11. Éolienne selon l'une des revendications précédentes, **caractérisée en ce que** les bobines des générateurs sont disposées dans l'anneau stationnaire (15).

12. Éolienne selon l'une des revendications précédentes, **caractérisée en ce que** les aimants des générateurs sont disposés dans le rotor (13).

13. Éolienne selon l'une des revendications précédentes, **caractérisée en ce que** l'énergie électrique produite par le générateur peut être prélevée au niveau de l'anneau stationnaire (15).

14. Éolienne selon l'une des revendications précédentes, **caractérisée en ce que** la structure porteuse comprend un montant en forme de T (17) avec un mât (27) et une traverse (29), l'anneau stationnaire (15) étant fixé aux extrémités de la traverse (29).

15. Éolienne selon l'une des revendications 5 à 14, **caractérisée en ce que** l'anneau du rotor (19) est disposé à l'extérieur de l'anneau stationnaire (15), sur celui-ci.
